(19) **Europäisches Patentamt European Patent Office Office européen des brevets**

(11) **EP 2 449 409 B1**

(12) **FASCICULE DE BREVET EUROPEEN**

(45) Date de publication et mention de la délivrance du brevet:
**17.04.2013 Bulletin 2013/16**

(21) Numéro de dépôt: **10724402.2**

(22) Date de dépôt: **28.05.2010**

(51) Int Cl.:
*G01S 19/23* (2010.01)    *G01S 19/48* (2010.01)

(86) Numéro de dépôt international:
**PCT/EP2010/057446**

(87) Numéro de publication internationale:
**WO 2011/000643 (06.01.2011 Gazette 2011/01)**

(54) **PROCEDE DE DETERMINATION DE LA POSITION D'UN MOBILE A UN INSTANT DONNE ET DE SURVEILLANCE DE L'INTEGRITE DE LA POSITION DUDIT MOBILE.**

VERFAHREN ZUR BESTIMMUNG DER POSITION EINES MOBILEN KÖRPERS IN EINEM BESTIMMTEN MOMENT UND ZUR ÜBERWACHUNG DER INTEGRITÄT DER POSITION DES MOBILEN KÖRPERS

METHOD FOR DETERMINING THE POSITION OF A MOBILE BODY AT A GIVEN INSTANT AND FOR MONITORING THE INTEGRITY OF THE POSITION OF SAID MOBILE BODY

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **30.06.2009 FR 0903191**

(43) Date de publication de la demande:
**09.05.2012 Bulletin 2012/19**

(73) Titulaire: **Thales**
**92200 Neuilly Sur Seine (FR)**

(72) Inventeurs:
• **CLEMENCEAU, Pierre-Jérôme**
  **F-26120 Chabeuil (FR)**
• **COATANTIEC, Jacques**
  **F-26120 Fauconnieres (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
WO-A-2008/040658    WO-A-2008/049800
US-A1- 2003 083 792    US-A1- 2007 222 674

**Description**

La présente invention est relative à un procédé de détermination de la position d'un mobile et de surveillance de l'intégrité de la position dudit mobile à un instant donné t. Le mobile est typiquement un aéronef.

Pour quantifier l'intégrité d'une mesure de position dans des applications telles que les applications aéronautiques, où l'intégrité est critique, on utilise un paramètre appelé " rayon de protection " RP de la mesure de position. Le rayon de protection correspond à une erreur de position maximale pour une probabilité donnée d'apparition d'erreur.

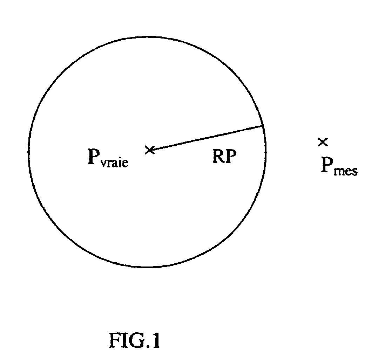

Comme visible sur la figure 1, le rayon de protection d'une mesure P, pour une probabilité de non-intégrité prédéterminée, est une borne supérieure de l'écart entre la valeur calculée Pmes et la valeur réelle Pvraie de la grandeur mesurée, telle qu'on a une probabilité inférieure à la probabilité de non-intégrité prédéterminée que la valeur réelle soit éloignée de la valeur calculée d'une distance supérieure au rayon de protection sans que l'on déclenche une alarme vers un système de navigation. Autrement dit, il y a donc une probabilité maximale égale à la probabilité de non intégrité prédéterminée pour que la valeur mesurée soit en dehors d'un cercle de rayon égal au rayon de protection autour de la valeur vraie.

On connaît des procédés de détermination de la position d'un mobile et de surveillance de l'intégrité de cette position à un instant donné t à partir de signaux provenant d'une constellation de satellites visibles. Un système mettant en oeuvre un procédé de ce type est communément appelé système GNSS ("Global Navigation Satellite System.")

Dans ces procédés, un récepteur de positionnement par satellites embarqué à bord du mobile fournit des informations de position du mobile obtenues par triangulation à partir des signaux émis par les satellites visibles depuis le mobile. Les informations fournies peuvent être momentanément indisponibles car le récepteur doit avoir en vue directe un minimum de quatre satellites du système de positionnement pour pouvoir calculer une position. Elles sont en outre d'une précision variable, dépendant de la géométrie de la constellation à la base de la triangulation, et bruitées car reposant sur la réception de signaux de très faibles niveaux provenant de satellites éloignés ayant une faible puissance d'émission. Mais elles ne souffrent pas de dérive à long terme, les positions des satellites défilant sur leurs orbites étant connues avec précision sur le long terme. Les bruits et les erreurs peuvent être liés à des pannes des satellites. Par "panne," on entend une situation anormale où le satellite émet des signaux qui ont l'apparence de signaux normaux mais qui sont anormaux et conduisent à des erreurs de position dues, par exemple, aux systèmes satellitaires, au récepteur ou à la propagation du signal entre l'émetteur satellitaire et le récepteur de signaux GNSS.

La limitation majeure de ce type de procédés est le manque de disponibilité. Les positions et les calculs d'intégrité peuvent être momentanément indisponibles lorsque les informations envoyées par les satellites sont indisponibles. Ceci est également valable lorsqu'on équipe un récepteur de positionnement par satellites d'un système d'estimation de précision et de disponibilité dit RAIM (de l'anglo-saxon "Receiver Autonomous Integrity Monitoring") apte à détecter les anomalies et à en informer l'utilisateur, et d'un système FDE ("Fault Detection Exclusion") excluant instantanément le satellite en panne. Ces dispositifs permettent de diminuer instantanément l'erreur sur les positions calculées ultérieurement. On parle de processus "snapshot".

On connaît des procédés dits hybrides INS/ GNSS non augmentés qui combinent mathématiquement, au moyen d'une unité d'hybridation, les informations fournies par une unité de positionnement inertielle et les informations fournies par un récepteur de positionnement par satellite pour tirer les avantages des deux types d'information. Une unité de positionnement inertielle est couramment appelée système INS ("Inertial Navigation System"). Elle est placée à bord du mobile et comprend un ensemble de capteurs inertiels (capteurs gyrométriques et capteurs accélérométriques). Elle est apte à fournir des données de positionnement en permanence, en outre ces données sont précises à court terme. En revanche ces données dérivent sur le long terme (sous l'influence des défauts des capteurs).

Un exemple de procédé de détermination de positions et de surveillance de leur intégrité est décrit dans la demande de brevet WO2008040658 déposée par la demanderesse. Dans ce procédé, l'hybridation est réalisée par un filtre de Kalman. Le filtre de Kalman reçoit les points de position et de vitesse fournis par l'unité de mesure inertielle et les mesures de positionnement (pseudo-distance et pseudo-vitesse) fournies par l'unité de positionnement par satellites (on parle d'hybridation serrée ou en axes de satellites), modélise l'évolution des erreurs de la centrale inertielle et délivre l'estimée a posteriori de ces erreurs qui sert à recaler le point de positionnement et de vitesse de la centrale inertielle. L'hybridation est réalisée en boucle fermée.

WO 2008/049800 décrit le principe d'utilisation simultanée d'un dispositif DGPS et d'une unité d'hybridation INS/GNSS. Ceci permet la détermination précise de la position par le dispositif DGPS, et assure la provision d'informations de position par l'unité INS/GNSS dans le cas, où une réception adéquate des signaux satellitaires n'est pas possible.

Un procédé de surveillance de l'intégrité de la mesure de position calcule en permanence un rayon de protection associé à la mesure de position du mobile. Un rayon de protection d'une mesure de position calculé par un procédé de ce type a une performance généralement proche de celle du rayon de protection d'un dispositif du type GNSS (généralement plusieurs centaines de mètres avec une probabilité que l'erreur de position dépasse le rayon de protection sans qu'une alarme soit envoyée de l'ordre de $10^{-5}$ à $10^{-7}$ h$^{-1}$.)

Les procédés hybrides tirent les avantages de procédés basés sur une unité de mesure inertielle et de ceux basés sur une unité de mesure GPS; ils présentent, grâce à l'unité de positionnement inertielle, l'avantage de fournir des positions et des rayons de protection en permanence, les positions ne présentant pas de dérive à long terme, sauf en cas de perte d'information satellite et les rayons de protection ne présentant pas de saut brutal de valeur lors de la perte de disponibilité de l'information satellite. Par ailleurs les informations de position ainsi calculées présentent une précision proche de celle d'un dispositif de positionnement GNSS lorsque l'information satellite est disponible.

Par ailleurs, on connait des procédés d'augmentation GNSS du type GBAS ou SBAS, basés sur une ou plusieurs stations au sol, aptes à identifier les erreurs sur les informations fournies par des satellites et à fournir à une unité de positionnement par satellites augmentée embarquée à bord de l'aéronef, des corrections individuelles sur les signaux émis par les satellites.

Les procédés d'augmentation permettent de fournir des informations de position de meilleure précision que celles issues d'une unité de positionnement par satellites et de surveiller l'intégrité de ces mesures en donnant accès à de faibles rayons de protection (classiquement décamétriques), avec un niveau d'intégrité défini par le système (probabilité que l'erreur de position dépasse le rayon de protection sans qu'une alarme, soit envoyé - classiquement de l'ordre de $10^{-5}$ à $10^{-7}$ $h^{-1}$.)

Le procédé d'augmentation SBAS (de l'anglo-saxon "Space-Based Augmentation System") s'appuie sur un système d'augmentation non embarqué disposé au sol comprenant des stations de référence au sol reliées entre elles, qui reçoivent les informations émises par les satellites, déterminent les erreurs sur ces informations ainsi que les corrections associées. Les corrections et les informations sur la validité sont envoyées à des satellites géostationnaires qui les transmettent à l'unité de positionnement augmentée embarquée. Le procédé d'augmentation GBAS ("Ground Based Augmentation System") fonctionne quant à lui grâce à un système d'augmentation non embarqué comprenant une station locale dont la position est connue avec précision. La station locale calcule les corrections et les validités et les transmet à l'unité de positionnement embarquée, par exemple, par un procédé radio-fréquence.

Les positions et les calculs d'intégrité issus des procédés d'augmentation peuvent être momentanément indisponibles lorsque les informations envoyées par les satellites sont indisponibles ou lorsque le système d'augmentation est défaillant. Ils peuvent par ailleurs considérés comme indisponibles s'ils ne vérifient pas les conditions de précision et d'intégrité demandées.

Plus généralement, on connaît des procédés de positionnement basés sur des dispositifs de positionnement, aptes à calculer des positions et à surveiller l'intégrité desdites positions, avec de meilleures précision et/ou de plus faibles rayons de protection que ceux issus d'un dispositif hybride du type INS / GNSS décrit ci-dessus. L'information issue de ces dispositifs peut, tout comme celle issue des dispositifs d'augmentation, être indisponible à certains moments.

Le but de la présente invention est de proposer un procédé de détermination de la position d'un mobile et de surveillance de l'intégrité de la mesure de position qui présente à la fois les avantages d'un procédé hybride INS /GNSS et à la fois les avantages d'un procédé d'augmentation ou plus généralement les avantages d'un procédé de positionnement présentant généralement de meilleures performances qu'un procédé hybride mais pouvant être momentanément indisponible.

Plus précisément, on cherche à proposer un procédé et un système de détermination de la position d'un mobile et de surveillance de l'intégrité de la mesure de position qui présente des rayons de protection aussi faibles qu'un procédé d'augmentation (ou plus généralement qu'un dispositif de positionnement précité), qui garantisse l'intégrité des mesures de position fournies et qui soit apte à fournir des mesures de position et à surveiller leur intégrité de manière continue.

A cet effet, l'invention a pour objet un procédé de détermination de la position d'un mobile à un instant donné et de surveillance de l'intégrité de la position dudit mobile, ledit procédé comprenant:

- une étape de mémorisation de la position dudit mobile à un l'instant précédant et d'un rayon de protection associé,
- une étape d'acquisition lorsqu'elles sont disponibles, d'informations de position intermédiaires issues d'un dispositif de positionnement intermédiaire et d'un rayon de protection intermédiaire associé à la position intermédiaire issue dudit dispositif de positionnement intermédiaire,
- une étape d'acquisition d'informations de vitesse hybride et d'un rayon de protection de vitesse hybride associé à la vitesse hybride déterminés par une unité d'hybridation INS/GNSS,
- une étape de détermination d'une position entretenue à l'instant donné en ajoutant, à la position du mobile à l'instant précédant l'instant donné, l'intégrale de la vitesse hybride entre l'instant précédent et l'instant donné,
- une étape de détermination du rayon de protection entretenu associé à la position entretenue en ajoutant au rayon de protection de position de l'instant précédent, l'intégrale du rayon de protection de vitesse hybride entre l'instant précédent et l'instant donné,
- une étape de détermination d'une meilleure position à l'instant donné, la meilleure position étant :

  o lorsque les informations issues du dispositif de positionnement intermédiaire sont disponibles, la position associée à un meilleur rayon de protection, le meilleur rayon de protection étant choisi en comparant, en fonction d'un critère de sélection prédéterminé, le rayon de protection intermédiaire au rayon de protection entretenu à l'instant donné

o lorsque les informations issues du dispositif de positionnement intermédiaire sont indisponibles, la position entretenue à l'instant donné.

Le procédé selon l'invention peut également avoir pour objet une des caractéristiques suivantes prises seules ou en combinaison :

- l'unité d'hybridation met en oeuvre un procédé de recalage se basant sur l'indépendance des pannes affectant les différents satellites,
- le critère de sélection consiste à identifier comme étant le meilleur rayon de protection, le rayon de protection le plus petit parmi le rayon de protection intermédiaire associé à la position intermédiaire et le rayon de protection entretenu associé à la position entretenue,
- l'étape d'acquisition du rayon de protection de vitesse hybride est précédée d'une étape de détermination, par l'unité d'hybridation, d'un rayon de protection de vitesse hybride horizontal (et/ou vertical) de vitesse hybride, comprenant les étapes suivantes :

  o détermination d'un rayon de protection de vitesse hybride horizontal (et/ou vertical) auxiliaire, sous une hypothèse dite H1, qu'une des mesures brutes, est erronée,
  o détermination d'un rayon de protection de vitesse hybride horizontal (et/ou vertical) auxiliaire sous une hypothèse dite H0, qu'aucune des mesures brutes, est erronée,
  o détermination du rayon de protection de vitesse hybride horizontal (et/ou vertical) comme un maximum des rayons de protection de vitesse hybride auxiliaires horizontaux (et/ou verticaux), la détermination des rayons de protection de vitesse hybride horizontaux (et/ou verticaux) auxiliaires étant fondée sur une détermination d'un rayon d'un cercle enveloppant une ellipse de confiance dans un plan horizontal (et/ou vertical) et l'ellipse de confiance est déterminée à partir d'une matrice de variance/covariance et d'une valeur de probabilité recherchée.

L'invention a également pour objet un système global destiné à être installé à bord d'un mobile, ledit système global comprenant :

- un sous-système apte à mettre en oeuvre le procédé selon l'invention,
- une unité de mesure inertielle délivrant des informations inertielles,
- un récepteur de positionnement par satellites recevant des signaux d'une constellation de satellites visibles poursuivis et délivrant des données brutes,
- une unité d'hybridation délivrant des informations de vitesse hybride et de rayon de protection de vitesse hybride à partir d'informations inertielles délivrées par l'unité de mesure inertielle et d'informations brutes délivrées par le récepteur de positionnement par satellites;
- un dispositif de positionnement intermédiaire délivrant des informations de positions intermédiaires et de rayons de protection intermédiaires associés.

Le système global peut également avoir pour objet les caractéristiques suivantes prises seules ou en combinaison :

- le dispositif de positionnement intermédiaire est un dispositif de positionnement augmenté,
- le mobile est un aéronef.

Le procédé selon l'invention permet d'obtenir des informations de position plus performantes en termes de rayon de protection et de disponibilité qu'un système d'augmentation seul ou qu'une unité d'hybridation classique. De plus ce procédé surveille en permanence l'intégrité des informations fournies. On dit que les mesures de position fournies par le procédé sont toujours garanties pour un niveau d'intégrité donné.

En outre, les positions du dispositif de positionnement sont entretenues avec une très bonne précision, grâce à la vitesse hybride. Par ailleurs, la position et le rayon de protection calculés en suivant le procédé selon l'invention sont une position et un rayon de protection de position entretenus plutôt qu'une position et un rayon de protection de position hybride lorsque l'information issue du dispositif de positionnement est indisponible ou dégradée. Ainsi les positions et le rayon de protection de position fournis par le procédé selon l'invention sont meilleurs (en termes de rayon de protection) que les valeurs hybrides. En effet, ils sont initialisés sur les valeurs issues du dispositif de positionnement intermédiaire qui présente, avant la dégradation ou l'indisponibilité, des meilleures performances que le dispositif hybride en termes de rayon de protection.

Par ailleurs, le procédé selon l'invention permet de fournir des positions exploitant (par l'intermédiaire de la vitesse hybride qui présente de bonnes performances) l'hybridation du type INS/GNSS même en cas de perte de l'augmentation ou plus généralement du dispositif de positionnement intermédiaire.

D'autres caractéristiques et avantages de l'invention apparaîtront à la lecture de la description détaillée qui suit, faite à titre d'exemple non limitatif et en référence aux dessins annexés dans lesquels :

- la figure 1, déjà commentée, représente un exemple de rayon de protection,
- la figure 2 représente schématiquement un système global de détermination de la position d'un mobile et de surveillance de l'intégrité de la position selon l'invention.

D'une figure à l'autre, les mêmes éléments sont repérés par les mêmes références.

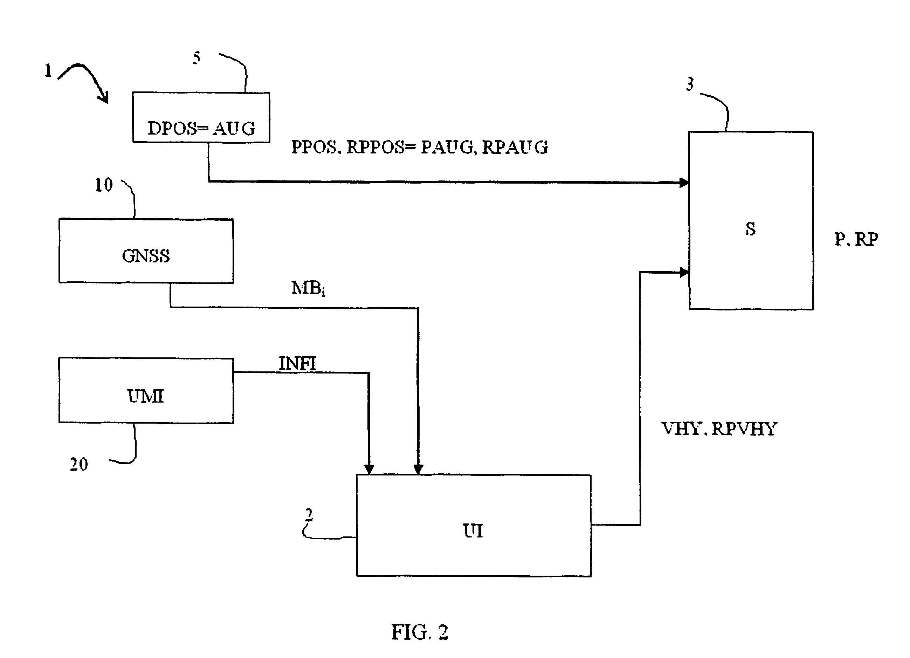

Sur la figure 2, on a représenté un système global 1 dans lequel on a implémenté un procédé de détermination de la position d'un mobile et de la surveillance de l'intégrité de la position à un instant donné, selon l'invention.

Le système global 1, destiné à être installé sur le mobile, par exemple un aéronef, comprend un récepteur de positionnement par satellites GNSS, 10, recevant des signaux d'une constellation de N satellites visibles poursuivis. Le récepteur de positionnement par satellites GNSS, 10, délivre des mesures brutes $MB_i$ de signaux émis par les satellites, i désignant un indice de satellite compris entre 1 et N. Le système global comprend également un dispositif de positionnement intermédiaire DPOS, 5 qui calcule des informations de position et des rayons de protection verticaux et les envoie à un sous-système S, 3. Ce dispositif de positionnement intermédiaire est apte à calculer des positions présentant de préférence, des meilleurs rayons de protection qu'un dispositif hybride INS/GNSS mais pouvant être indisponible à certains moments (en cas de panne ou par exemple lorsque ces informations ne vérifient pas une condition d'intégrité prédéterminée.) En outre, la qualité de l'information fournie par ce dispositif en termes de rayon de protection peut être détériorée à certains moments. Il s'agit par exemple de dispositifs de positionnement basés sur un récepteur d'images instantané (de l'anglo-saxon "snapshot") ou d'un dispositif apte à fournir une position de manière précise et non ambiguë par passage au dessus d'un point précis.

Pour plus de clarté, on appellera ce dispositif de positionnement un dispositif de positionnement intermédiaire calculant des positions intermédiaires PPOS et des rayons de protection horizontaux et/ou verticaux associés à la position intermédiaire $RP_hPOS$ et/ou $RP_vPOS$.

Dans le mode de réalisation représenté sur la figure 2, le dispositif de positionnement intermédiaire est un dispositif de positionnement augmenté embarqué à bord de l'aéronef apte à recevoir, lorsqu'ils sont disponibles, des signaux de la constellation de N satellites visibles poursuivis et, lorsqu'elles sont disponibles, des corrections COR, non représentées, fournies par un système de positionnement non embarqué. Le dispositif de positionnement intermédiaire DPOS, 5, est par exemple du type SBAS ou GBAS. En variante, le système de positionnement augmenté reçoit les corrections COR et des informations brutes provenant du récepteur de positionnement par satellites GNSS.

Dans ce mode de réalisation, les positions intermédiaires PPOS et les rayons de protection intermédiaires verticaux $RP_vPOS$ et/ou horizontaux $RP_hPOS$ sont des positions et des rayons de protections augmentés c'est-à-dire que ce sont des informations calculées à partir d'informations satellites brutes corrigées en prenant en compte les corrections issues du système d'augmentation non embarqué. Les informations issues d'un dispositif de positionnement augmenté embarqué sont disponibles uniquement lorsque l'information satellite est disponible et lorsque les dispositifs de positionnement augmentés embarqués et non embarqués fonctionnent.

Le système global 1 comprend une unité de mesure inertielle UMI, 20, comportant des gyromètres et des accéléromètres non représentés et délivrant des informations inertielles INFI sous formes d'incréments d'angles délivrés par des gyromètres et des incréments de vitesse délivrés par les accéléromètres. Le système global 1 comprend également une unité d'hybridation UI, 2 recevant les informations inertielles INFI délivrées par l'unité de mesure inertielle UMI, 20 et les informations brutes $MB_i$ délivrées par le récepteur de positionnement par satellites GNSS, 10. L'unité d'hybridation UI, 2 est du type INS/GNSS. Autrement dit, elle combine mathématiquement les informations fournies par une unité de mesure inertielle et les informations fournies par un récepteur de positionnement par satellite pour calculer à chaque instant donné t des vitesses hybrides.

L'unité d'hybridation UI, 2 délivre des mesures de vitesse hybride VHY et de rayons de protection de vitesse hybride verticaux $RP_vVHY$ et/ou horizontaux $RP_hVHY$ associés aux mesures de vitesse hybride VHY.

L'unité d'hybridation UI, 2 est apte à fournir des rayons de protection de vitesse hybride $RP_vVHY$, $RP_hVHY$ généralement de l'ordre de quelques $10^{-2}$m/s avec une probabilité que l'erreur de vitesse hybride dépasse le rayon de protection sans qu'une alarme ne soit envoyée de l'ordre de $10^{-5}$ à $10^{-7}$ $h^{-1}$.

On va maintenant décrire un exemple d'unité d'hybridation UI, 2 ainsi qu'un procédé de calcul, selon la présente invention, du rayon de protection de vitesse hybride RVHY ($\tau$) par l'unité d'hybridation ou éventuellement par le sous-système 3. L'unité d'hybridation UI, 2 est du type de celle décrite dans la demande de brevet WO2008040658. Elle comporte :

- un filtre de Kalman d'hybridation,
- un banc de N filtres secondaires,
- une plate-forme virtuelle, recevant les informations délivrées par l'unité de mesure inertielle,
- un module de calcul.

La plate-forme virtuelle produit des points de positionnement et de vitesse hybrides, PPVI constituant respectivement une position hybride et une vitesse hybride. La sortie de l'unité hybride UI, 2 comprend des vitesses hybrides délivrées par la plate-forme virtuelle ainsi que des rayons de protection de vitesse hybride horizontaux et verticaux.

Avantageusement la plate-forme virtuelle emploie des mesures d'altitude barométriques pour éviter une dérive de la position hybride suivant un axe vertical.

Le filtre de Kalman d'hybridation estime les erreurs réalisées sur les positions inertielles PPVI, il produit :

- un vecteur d'état VE correspondant aux erreurs du système hybride, obtenu en observant les écarts entre les points de positionnement et de vitesse inertiels PPVI et les mesures brutes $MB_i$ correspondantes ;
- une matrice de variance/covariance, MHYP de l'erreur faite sur l'estimation du vecteur d'état VE,
- une correction hybride qui comporte une estimation du vecteur d'état VE.

La description de l'agencement et des fonctions du filtre de Kalman et des filtres secondaires est réalisée dans la demande de brevet WO2008040658, notamment le procédé de recalage mis en oeuvre par l'unité d'hybridation qui corrige les valeurs de positionnement et de vitesses hybrides à partir des données satellites. Le procédé de recalage est apte à corriger les erreurs de vitesse dues aux défauts des capteurs inertiels et dues aux défauts affectant les informations fournies par les satellites en estimant les erreurs réalisées sur les positions inertielles PPVI à partir des données satellites et en excluant les satellites en panne de manière à fournir des informations présentant une bonne précision. A cet effet, l'unité d'hybridation comprend plusieurs filtres de Kalman en parallèle, un filtre principal travaillant sur l'ensemble des satellites en vue et des filtres secondaires travaillant avec tous les satellites en vue, sauf un. Cette architecture permet de s'assurer qu'un des filtres secondaires n'a pas subi l'influence d'un éventuel satellite en panne. Le procédé de recalage est basé sur le fait que les pannes affectant un satellite sont indépendantes de pannes affectant les autres satellites. Il fonctionne uniquement lorsque la panne d'un satellite n'a pas d'influence sur le fonctionnement des autres satellites. En variante, le procédé de recalage corrige les positions et vitesses hybrides en estimant l'écart entre les positions inertielles et les positions calculées à partir des informations satellites et compense ensuite l'écart entre ces valeurs en permanence.

Le module de calcul reçoit les informations de vitesse hybride et la matrice de variance/covariance et détermine des valeurs de rayons de protection de vitesse hybride. Ce procédé de calcul est similaire à celui qui est mis en oeuvre pour calculer les rayons de protection de position dans la demande de brevet WO2008040658 mais ils sont calculés à partir de la vitesse hybride au lieu d'être calculés à partir de la position hybride. Le procédé de calcul décrit est résumé ci-dessous, dans son application pour le calcul du rayon de protection horizontal de vitesse hybride. Le calcul d'un rayon de protection de vitesse hybride vertical est similaire et ne sera pas décrit.

On évalue un rayon de protection de vitesse hybride intermédiaire $RP_hVHY_{H0}$ auxiliaire en l'absence de panne de satellite, hypothèse communément désignée $H_0$, selon laquelle aucune des mesures brutes n'est erronée. Ce rayon de protection intermédiaire est lié directement à la variance de la vitesse et à la probabilité $P_{ni}$ que cette erreur dépasse le rayon de protection. C'est le coefficient de la diagonale de la matrice de variance/covariance qui correspond à la grandeur mesurée (ici la vitesse). L'écart type $\sigma$ est la racine carrée de cette variance et se déduit donc de la matrice P.

On détermine un rayon de protection horizontal de vitesse hybride auxiliaire $RP_hVHY_{H1}$ sous l'hypothèse dite H1 selon laquelle un des mesures brutes MBi (provenant d'un satellite i) est erronée par la méthode du maximum de séparation (ce calcul est décrit dans la demande de brevet WO2008040658.)

On détermine le rayon de protection horizontal de vitesse hybride comme un maximum des rayons de protection de vitesse hybride auxiliaires horizontaux $RP_hVHY_{H0}$ et $RP_hVHY_{H1}$.

La détermination du maximum est fondée sur la détermination d'un cercle enveloppant une ellipse de confiance dans un plan horizontal. L'ellipse de confiance est déterminée à partir de la matrice de variance/covariance de la vitesse hybride et d'une valeur de probabilité recherchée. Ce calcul est décrit dans la demande de brevet WO2008040658.

Avantageusement, la détermination du rayon de protection horizontal auxiliaire est fondée sur une valeur de probabilité de fausse alarme souhaitée et sur une valeur de probabilité de détection manquée souhaitée. Avantageusement, la détermination du rayon de protection de vitesse hybride horizontal auxiliaire $RP_hVHY_{H0}$ est fondée sur une valeur de probabilité de détection manquée souhaitée et sur une valeur de probabilité d'occurrence d'un défaut satellite non détecté.

Le système global 1 comprend en outre un sous-système S, 3 installé sur le mobile, qui met en oeuvre le procédé selon l'invention. A cet effet, il fait l'acquisition des informations de vitesse hybride VHY, et de rayon de protection de vitesse hybride RPVHY. Le sous-système S, 3 acquière également, lorsqu'elles sont disponibles, les informations de position intermédiaire PPOS et de rayon de protection intermédiaire RPPOS associé à la position intermédiaire PPOS.

Les rayons de protection de vitesse hybride RPVHY sont, soit les rayons de protection de vitesse hybride horizontaux, soit verticaux, soit une combinaison des rayons de protection horizontaux et verticaux. Dans ce dernier cas, l'acquisition des rayons de protection des rayons de protection de vitesse hybride RPVHY sont précédés d'une étape d'acquisition des rayons de protection horizontaux et/ou verticaux et d'une étape de calcul de la combinaison de ces deux rayons par l'unité d'hybridation ou le sous-système. De même, les rayons de protection intermédiaires de position sont, soit les rayons de protection de position intermédiaire horizontaux, soit verticaux, soit une combinaison des rayons de protection horizontaux et verticaux. On choisit des rayons de protection verticaux, lorsque l'on souhaite atterrir et avoir des mesures de position performantes dans la direction verticale, des rayons horizontaux lorsqu'on souhaite naviguer dans une zone étroite dans la direction horizontale (par exemple entre deux montagnes), des combinaisons de rayons de protection verticaux et horizontaux, lorsqu'on souhaite pondérer le poids de ces rayons respectifs en fonction de la configuration du vol.

A partir de ces données, le sous-système 3 détermine la position P(t) d'un mobile et surveille l'intégrité de cette position en calculant au moins un rayon de protection de position RP(t) associé à la position P(t), pour un niveau d'intégrité donné.

Le procédé selon l'invention, mis en oeuvre par le sous-système S, 3 est le suivant: à l'instant initial t=0, on initialise la position initiale du mobile et le rayon de protection de position RP(t=0) sur les valeurs respectives de la position intermédiaire PPOS(t=0) et du rayon de protection de position intermédiaire RPPOS(t=0). Pour que le procédé selon l'invention débute, il faut faire l'acquisition des valeurs de position et de rayon de protection issus du dispositif de positionnement intermédiaire.

Supposons que l'on connaisse le rayon de protection de position RP(t-Δt) et la position associée P(t-Δt) à un instant t-Δt précédant l'instant donné d'un intervalle de temps Δt. Pour déterminer la position du mobile à un instant donné t, on détermine la position qui est associée au meilleur rayon de protection à cet instant.

A cet effet, on détermine une position entretenue PI(t) en ajoutant, à la position du mobile P(t), l'intégrale de la vitesse hybride entre l'instant précédent t-Δt et l'instant donné t:

$$PI(t) = P(t - \Delta t) + \int_{\tau=t-\Delta t}^{\tau=t} VHY(\tau) d\tau$$

On détermine également le rayon de protection de position entretenu RPI(t) associé à la position entretenue PI(t). Ce rayon est obtenu en ajoutant au rayon de protection RP(t) de l'instant précédent, l'intégrale du rayon de protection de vitesse hybride RPVHY(t) entre l'instant précédent t-Δt et l'instant donné t:

$$RPI(t) = RP(t - \Delta t) + \int_{\tau=t-\Delta t}^{\tau=t} RP\,VHY(\tau) d\tau$$

On compare ensuite, en fonction d'un critère de sélection prédéterminé, le rayon de protection de position entretenu RPI(t) et le rayon de protection de position intermédiaire RPPOS(t).

De préférence, le critère de sélection consiste à considérer que le meilleur rayon de protection est celui qui est le plus petit.

La position P(t) calculée par le dispositif selon l'invention est la position la meilleure en termes de rayon de protection. Autrement dit, c'est celle qui a le meilleur rayon de protection.

Si l'information issue du dispositif de positionnement intermédiaire est disponible, la position P(t) fournie par le dispositif selon l'invention est la position entretenue PI(t).

Notons que la vitesse hybride (dérivée de la position hybride) fournie par l'unité d'hybridation UI, 2 est très précise (l'erreur sur la vitesse est classiquement de quelques cm par seconde) car d'une part, les erreurs sur les informations de vitesse issues des satellites sont généralement très faibles, l'erreur de position satellite étant très lentement variable, d'autre part, en cas de perte d'information satellite, les erreurs sur les vitesses hybrides se dégradent très doucement, de part la nature des informations inertielles.

Lorsque l'information issue du dispositif de positionnement intermédiaire se dégrade, le rayon de protection de position intermédiaire augmente pour un niveau d'intégrité donné. On dit que la position issue du dispositif de positionnement intermédiaire est moins performante en termes de rayon de protection. Si la dégradation ou la perte d'information est due à une perte d'informations satellites, les informations hybrides de se dégradent également (mais lentement). En revanche si la dégradation ou l'indisponibilité est due à une panne du dispositif de positionnement intermédiaire, la qualité des informations hybrides est inchangée.

Supposons que dans le mode de réalisation dans lequel le dispositif de positionnement intermédiaire est un dispositif d'augmentation, le dispositif d'augmentation présente une dégradation due à une dégradation des informations satellites à partir d'un instant de dégradation td. Avant la dégradation, la position P(t) et le rayon de protection associé RP(t) du mobile, sont respectivement égale à la position augmentée PAUG et égal au rayon de protection augmenté RPAUG au même instant. Avant la dégradation, le rayon de protection de position augmenté est plus faible que le rayon de protection de position entretenu.

Lorsque l'information issue du dispositif d'augmentation se dégrade, le rayon de protection de position augmentée augmente contrairement au rayon de protection associé à la vitesse hybride. La position P(t) devient alors la position entretenue PI(t) dés que le rayon de protection de position augmenté dépasse le rayon de protection entretenu RPI(t). Ainsi, le procédé selon le premier mode de réalisation de l'invention fournit des mesures de position dont le rayon de protection, pour un niveau d'intégrité donné, augmente moins vite que le rayon de protection de position augmentée après dégradation du dispositif d'augmentation.

Par ailleurs supposons que l'information issue des satellites est perdue. Les rayons de protection de position augmentés ne sont plus disponibles. La position calculée par le procédé selon l'invention est la position entretenue.

Par conséquent, lorsque le dispositif de positionnement intermédiaire fournit une meilleure information de position que la position entretenue, la position calculée par le procédé selon l'invention est la position intermédiaire et dés que le dispositif de positionnement intermédiaire fournit une moins bonne information que la position entretenue en termes de rayon de protection, la position calculée devient la position entretenue.

La surveillance de l'intégrité de la position P(t) calculée au moyen du procédé selon l'invention est réalisée en calculant au moins un rayon de protection RP(t) associé à la position. Comme la meilleure position est celle qui a le meilleur rayon de protection, un rayon de protection est automatiquement calculé dans le procédé selon l'invention.

Il est possible de calculer des rayons de protection supplémentaires à partir des rayons de protection qui n'ont pas été utilisés par le sous-système 3. Si la position la meilleure est la position intermédiaire et qu'elle a été déterminée à partir de rayons de protection verticaux, le rayon de protection horizontal est le rayon de protection intermédiaire horizontal envoyé au sous système S par le dispositif de positionnement intermédiaire. Si la position la meilleure est la position entretenue et qu'elle a été déterminée par le procédé selon l'invention à partir de rayons de protection verticaux, le rayon de protection horizontal est le rayon de protection horizontal entretenu. On calcule le rayon de protection horizontal entretenu en ajoutant au rayon de protection horizontal de l'instant précédent, l'intégrale du rayon de protection de vitesse horizontal entre l'instant précédent et l'instant donné.

La mise en oeuvre du procédé selon l'invention ne nécessite pas de modification des unités d'hybridation ni des dispositifs de positionnement intermédiaires. Il n'est pas nécessaire de prévoir une unité d'hybridation dédiée pour mettre en oeuvre le procédé selon l'invention. On ajoute uniquement un sous-système mettant en oeuvre le procédé selon l'invention à une unité d'hybridation classique et à un dispositif de positionnement intermédiaire de l'art antérieur.

Le procédé selon l'invention présente un intérêt particulier lorsque le dispositif de positionnement intermédiaire est un dispositif d'augmentation et lorsque l'unité hybride met en oeuvre un procédé de recalage et que celui-ci se base sur l'indépendance des pannes affectant les différents satellites. Il n'est dans ce cas pas possible d'utiliser en entrée du dispositif hybride, des mesures GNSS augmentées car les mesures augmentées sont corrélées entre elles. En effet, lorsque le système d'augmentation présente une défaillance (par exemple, s'il se base sur une position des stations de référence dont la valeur est erronée ou s'il y a une erreur lors de la transmission des données, etc), cette défaillance est répercutée sur les corrections réalisées sur les signaux envoyés par les différents satellites. En mettant en oeuvre le procédé selon l'invention on peut, sans utiliser de données augmentées en entrée de l'unité d'hybridation, bénéficier des avantages d'un dispositif d'augmentation ainsi que d'un dispositif hybride.

Outre un aéronef le mobile est par exemple, un navire ou un véhicule terrestre.

## Revendications

**1.** Procédé de détermination de la position (P(t)) d'un mobile à un instant donné (t) et de surveillance de l'intégrité de la position dudit mobile, ledit procédé étant **caractérisé en ce qu'**il comprend :

- une étape de mémorisation de la position dudit mobile (P(t - Δt)) à un instant précédent (t - Δt) et d'un rayon de protection (RP(t - Δt)) associé,
- une étape d'acquisition lorsqu'elles sont disponibles, d'informations de position intermédiaires (PPOS) issues d'un dispositif de positionnement intermédiaire DPOS (5) et d'un rayon de protection intermédiaire (RPPOSS) associé à la position intermédiaire (PPOS) issue dudit dispositif de positionnement intermédiaire DPOS (5),
- une étape d'acquisition d'informations de vitesse hybride (VHY) et d'un rayon de protection de vitesse hybride (RPVHY) associé à la vitesse hybride (VHY) déterminés par une unité d'hybridation UI (2) INS/GNSS,
- une étape de détermination d'une position entretenue (PI(t)) à l'instant donné (t) en ajoutant, à la position du mobile à l'instant précédent (P(t - Δt)), l'intégrale de la vitesse hybride (VHY) entre l'instant précédent (t - Δt) et l'instant donné (t),

- une étape de détermination du rayon de protection entretenu (RPI(t)) associé à la position entretenue en ajoutant au rayon de protection (RP(t - Δt)) de position de l'instant précédent (t - Δt), l'intégrale du rayon de protection de vitesse hybride (RPVHY) entre l'instant précédent (t - Δt) et l'instant donné (t),

- une étape de détermination d'une meilleure position à l'instant donné (t), la meilleure position étant :

o lorsque les informations issues du dispositif de positionnement intermédiaire sont disponibles, la position associée à un meilleur rayon de protection, le meilleur rayon de protection étant choisi en comparant, en fonction d'un critère de sélection prédéterminé, le rayon de protection intermédiaire (RPPOS) au rayon de protection entretenu (RPI) à l'instant donné,

o lorsque les informations issues du dispositif de positionnement intermédiaire sont indisponibles, la position entretenue à l'instant donné,

la position (P(t)) du mobile étant la meilleure position.

2. Procédé de détermination de la position (P(t)) d'un mobile à un instant donné (t) et de surveillance de l'intégrité de ladite position selon la revendication précédente, **caractérisé en ce que** l'unité d'hybridation UI (2) met en oeuvre un procédé de recalage se basant sur l'indépendance des pannes affectant les différents satellites.

3. Procédé de détermination de la position (P(t)) d'un mobile à un instant donné (t) et de surveillance de l'intégrité de ladite position selon l'une quelconque des revendications 1 à 2, **caractérisé en ce que** le critère de sélection consiste à identifier comme étant le meilleur rayon de protection, le rayon de protection le plus petit parmi le rayon de protection intermédiaire (RPPOS) associé à la position intermédiaire (PPOS) et le rayon de protection entretenu associé à la position entretenue.

4. Procédé de détermination de la position (P(t)) d'un mobile à un instant donné (t) et de surveillance de l'intégrité de ladite position selon l'une quelconque des revendications précédentes, **caractérisé en ce que** l'étape d'acquisition du rayon de protection de vitesse hybride est précédée d'une étape de détermination, par l'unité d'hybridation UI (2), d'un rayon de protection de vitesse hybride horizontal (et/ou vertical) de vitesse hybride, comprenant les étapes suivantes :

- détermination d'un rayon de protection de vitesse hybride horizontal (et/ou vertical) auxiliaire, sous une hypothèse dite H1, qu'une des mesures brutes, MBi est erronée,

- détermination d'un rayon de protection de vitesse hybride horizontal (et/ou vertical) auxiliaire sous une hypothèse dite H0, qu'aucune des mesures brutes, MBi est erronée,

- détermination du rayon de protection de vitesse hybride horizontal (et/ou vertical) comme un maximum des rayons de protection de vitesse hybride auxiliaires horizontaux (et/ou verticaux), la détermination des rayons de protection de vitesse hybride horizontaux (et/ou verticaux) auxiliaires étant fondée sur une détermination d'un rayon d'un cercle enveloppant une ellipse de confiance dans un plan horizontal (et/ou vertical), et **en ce que** l'ellipse de confiance est déterminée à partir d'une matrice de variance/covariance et d'une valeur de probabilité recherchée.

5. Système global (1) destiné à être installé à bord d'un mobile, ledit système global (1) comprenant :

- un sous-système S (3) apte à mettre en oeuvre le procédé selon l'une quelconque des revendications 1 à 4,

- une unité de mesure inertielle UMI (20) délivrant des informations inertielles (INFI),

- un récepteur de positionnement par satellites GNSS (10) recevant des signaux d'une constellation de satellites visibles poursuivis et délivrant des données brutes (MBi),

- une unité d'hybridation UI (2) délivrant des informations de vitesse hybride (VHY) et de rayon de protection de vitesse hybride à partir d'informations inertielles (INFI) délivrées par l'unité de mesure inertielle UMI (20) et d'informations brutes (MBi) délivrées par le récepteur de positionnement par satellites GNSS (10);

- un dispositif de positionnement intermédiaire DPOS (5) délivrant des informations de positions intermédiaires (PPOS) et de rayons de protection intermédiaires associés (RPPOS).

6. Système global (1) destiné à être installé à bord d'un mobile selon la revendication précédente, **caractérisé en ce que** le dispositif de positionnement intermédiaire est un dispositif de positionnement augmenté.

7. Système global (1) selon l'une quelconque des revendications 5 à 6, **caractérisé en ce que** le mobile est un aéronef.

**Claims**

1. A method for determining the position (P(t)) of a mobile object at a given instant (t) and for monitoring the integrity of the position of said mobile object, said method being **characterised in that** it comprises:

   - a step of storing the position of said mobile object (P(t-$\Delta$t)) at a preceding instant (t - $\Delta$t) and an associated protection radius (RP(t-$\Delta$t));
   - a step of acquiring intermediate position information (PPOS) when available, coming from an intermediate positioning device DPOS (5) and an intermediate protection radius (RPPOSS) associated with the intermediate position (PPOS) coming from said intermediate positioning device DPOS (5);
   - a step of acquiring hybrid speed (VHY) information and a hybrid speed protection radius (RPVHY) associated with the hybrid speed (VHY) determined by an INS/GNSS hybridisation unit UI (2);
   - a step of determining a maintained position (P1(t)) at the given instant (t) by adding the integral of the hybrid speed (VHY) between the preceding instant (t - $\Delta$t) and the given instant (t) to the position of the mobile object at the preceding instant (P(t - $\Delta$t));
   - a step of determining the maintained protection radius (RPI(t)) associated with the maintained position by adding the integral of the hybrid speed protection radius (RPVHY) between the preceding instant (t - $\Delta$t) and the given instant (t) to the position protection radius (RP(t-$\Delta$t)) of the preceding instant (t - $\Delta$t);
   a step of determining a best position at the given instant (t), the best position being:

      when the information coming from the intermediate positioning device is available, the position associated with a best protection radius, the best protection radius being selected by comparing, as a function of a predetermined selection criterion, the intermediate protection radius (RPPOS) with the maintained protection radius (RPI) at the given instant;
      when the information coming from the intermediate positioning device is unavailable, the maintained position at the given instant, the position (P(t)) of the mobile object being the best position.

2. The method for determining the position (P(t)) of a mobile object at a given instant (t) and for monitoring the integrity of said position according to the preceding claim, **characterised in that** the hybridisation unit UI (2) implements a resetting method that is based on the independence of failures that affect the different satellites.

3. The method for determining the position (P(t)) of a mobile object at a given instant (t) and for monitoring the integrity of said position according to any one of claims 1 to 2, **characterised in that** the selection criterion consists in identifying the best protection radius as being the smallest protection radius from the intermediate protection radius (RPPOS) associated with the intermediate position (PPOS) and the maintained protection radius associated with the maintained position.

4. The method for determining the position (P(t)) of a mobile object at a given instant (t) and for monitoring the integrity of said position according to any one of the preceding claims, **characterised in that** the step of acquiring the hybrid speed protection radius is preceded by a step of determining, by the hybridisation unit UI (2), a horizontal (and/or vertical) hybrid speed protection radius of hybrid speed, comprising the following steps:

   - determining an auxiliary horizontal (and/or vertical) hybrid speed protection radius, with the hypothesis, referred to as H1, that one of the raw measurements, MBi, is erroneous;
   - determining an auxiliary horizontal (and/or vertical) hybrid speed protection radius, with the hypothesis, referred to as H0, that none of the raw measurements, MBi, are erroneous;
   - determining an auxiliary horizontal (and/or vertical) hybrid speed protection radius as a maximum of the auxiliary horizontal (and/or vertical) hybrid speed protection radii, the determination of the auxiliary horizontal (and/or vertical) hybrid speed protection radii being based on a determination of a radius of a circle that envelopes a confidence ellipse in a horizontal (and/or vertical) plane, and **in that** the confidence ellipse is determined on the basis of a variance/covariance matrix and a desired probability value.

5. A global system (1) that is designed to be installed on board a mobile object, said global system (1) comprising:

   - a sub-system S (3) that is designed to implement the method according to any one of claims 1 to 4;
   - an inertial measurement unit UMI (20) supplying inertial information (INFI);
   - a GNSS satellite positioning receiver (10) receiving signals from a constellation of visible tracked satellites and delivering rough data (MBi);

- a hybridisation unit UI (2) delivering hybrid speed (VHY) and hybrid speed protection radius information on the basis of inertial information (INFI) that is delivered by said inertial measurement unit UMI (20) and raw information (MBi) that is delivered by said GNSS satellite positioning receiver (10);
- an intermediate positioning device DPOS (5) delivering intermediate position (PPOS) and associated intermediate protection radius (RPPOS) information.

6. The global system (1) that is designed to be installed on board a mobile object according to the preceding claim, **characterised in that** said intermediate positioning device is an enhanced positioning device.

7. The global system (1) according to any one of claims 5 to 6, **characterised in that** the mobile object is an aircraft.

**Patentansprüche**

1. Verfahren zum Ermitteln der Position (P(t)) eines mobilen Objekts zu einem gegebenen Zeitpunkt (t) und zum Überwachen der Integrität der Position des mobilen Objekts, wobei das Verfahren **dadurch gekennzeichnet ist, dass** es Folgendes beinhaltet:

- einen Schritt des Speicherns der Position des mobilen Objekts (P(t-Δt)) zu einem vorherigen Zeitpunkt (t - Δt) und eines assoziierten Schutzradius (RP(t-Δt));
- einen Schritt des Erfassens von Zwischenpositionsinformationen (PPOS), wenn sie verfügbar sind, von einer Zwischenpositionierungsvorrichtung DPOS (5) und eines mit der Zwischenposition (PPOS) von der Zwischenpositionsvorrichtung DPOS (5) assoziierten Zwischenschutzradius (RPPOSS);
- einen Schritt des Erfassens von Hybridgeschwindigkeitsinformationen (VHY) und eines Hybridgeschwindigkeits-Schutzradius (RPVHY), der mit der von einer INS/GNSS-Hybridisierungseinheit UI (2) ermittelten Hybridgeschwindigkeit (VHY) assoziiert ist;
- einen Schritt des Ermittelns einer zum gegebenen Zeitpunkt (t) gehaltenen Positioin (P1(t)) durch Addieren des Integrals der Hybridgeschwindigkeit (PHY) zwischen dem vorherigen Zeitpunkt (t - Δt) und dem gegebenen Zeitpunkt (t) zur Position des mobilen Objekts zum vorherigen Zeitpunkt (P(t - Δt));
- einen Schritt des Ermittelns des mit der gehaltenen Position assoziierten gehaltenen Schutzradius (RPI(t)) durch Addieren des Integrals des Hybridgeschwindigkeits-Schutzradius (RPVHY) zwischen dem vorherigen Zeitpunkt (t - Δt) und dem gegebenen Zeitpunkt (t) zum Positionsschutzradius (RP(t-Δt)) des vorherigen Zeitpunkts (t - Δt);
- einen Schritt des Ermittelns einer besten Position zum gegebenen Zeitpunkt (t), wobei die beste Position wie folgt ist:

wenn die Informationen von der Zwischenpositionierungsvorrichtung zur Verfügung stehen, die mit einem besten Schutzradius assoziierte Position, wobei der beste Schutzradius durch Vergleichen, in Abhängigkeit von einem vorbestimmten Auswahlkriterium, des Zwischenschutzradius (RPPOS) mit dem gehaltenen Schutzradius (RPI) zum gegebenen Zeitpunkt gewählt wird;
wenn die Informationen von der Zwischenpositionierungsvorrichtung nicht zur Verfügung steht, die gehaltene Position zum gegebenen Zeitpunkt, wobei die Position (P(t)) des mobilen Objekts die beste Position ist.

2. Verfahren zum Ermitteln der Position (P(t)) eines mobilen Objekts zu einem gegebenen Zeitpunkt (t) und zum Überwachen der Integrität der Position nach dem vorherigen Anspruch, **dadurch gekennzeichnet, dass** die Hybridisierungseinheit UI (2) ein Rückstellverfahren implementiert, das auf der Unabhängigkeit von die verschiedenen Satelliten beeinflussenden Störungen beruht.

3. Verfahren zum Ermitteln der Position (P(t)) eines mobilen Objekts zu einem gegebenen Zeitpunkt (t) und zum Überwachen der Integrität der Position nach einem der Ansprüche 1 bis 2, **dadurch gekennzeichnet, dass** das Auswahlkriterium im Identifizieren des besten Schutzradius als den kleinsten Schutzradius aus dem mit der Zwischenposition (PPOS) assoziierten Schutzradius (RPPOS) und dem mit der gehaltenen Position assoziierten Schutzradius besteht.

4. Verfahren zum Ermitteln der Position (P(t)) des mobilen Objekts zu einem gegebenen Zeitpunkt (t) und zum Überwachen der Integrität der Position nach einem der vorherigen Ansprüche, **dadurch gekennzeichnet, dass** der Schritt des Erfassens des Hybridgeschwindigkeits-Schutzradius auf einen Schritt des Ermittelns, mit der Hybridisierungseinheit UI (2), eines horizontalen (und/oder vertikalen) Hybridgeschwindigkeits-Schutzradius der Hybridgeschwindigkeit folgt, der die folgenden Schritte beinhaltet:

- Ermitteln eines zusätzlichen horizontalen (und/oder vertikalen) Hybridgeschwindigkeits-Schutzradius, unter einer mit H1 bezeichneten Hypothese, dass einer der Rohmesswerte MBi fehlerhaft ist;
- Ermitteln eines zusätzlichen horizontalen (und/oder vertikalen) Hybridgeschwindigkeits-Schutzradius, unter einer mit H0 bezeichneten Hypothese, dass keiner der Rohmesswerte MBi fehlerhaft ist;
- Ermitteln eines zusätzlichen horizontalen (und/oder vertikalen) Hybridgeschwindigkeits-Schutzradius als Maximum der zusätzlichen horizontalen (und/oder vertikalen) Hybridgeschwindigkeits-Schutzradien, wobei die Ermittlung der zusätzlichen horizontalen (und/oder vertikalen) Hybridgeschwindigkeits-Schutzradien auf einer Ermittlung eines Radius eines Kreises basiert, der eine Konfidenzellipse in einer horizontalen (und/oder vertikalen) Ebene einhüllt, und dadurch, dass die Konfidenzellipse auf der Basis einer Varianz/Kovarianz-Matrix und eines gesuchten Wahrscheinlichkeitswertes basiert.

5. Globales System (1), das zur Installation an Bord eines mobilen Objekts ausgelegt ist, wobei das globale System (1) Folgendes umfasst:

- ein Subsystem S (3), das zum Ausführen des Verfahrens nach einem der Ansprüche 1 bis 4 ausgelegt ist;
- eine Trägheitsmesseinheit UMI (20), die Trägheitsinformationen (INFI) liefert;
- einen GNSS-Satelliten-Positionierungsempfänger (10), der Signale von einer Konstellation von sichtbaren verfolgten Satelliten empfängt und Rohdaten (MBi) liefert;
- eine Hybridisierungseinheit UI (2), die Hybridgeschwindigkeitsinformationen (VHY) und Hybridgeschwindigkeits-Schutzradiusinformationen auf der Basis von Trägheitsinformationen (INFI) liefert, die von der Trägheitsmesseinheit UMI (20) geliefert werden, und Rohinformationen (MBi), die von dem GNSS-Satelliten-Positionierungsempfänger (10) geliefert werden;
- eine Zwischenpositionierungsvorrichtung DPOS (5), die Zwischenpositionsinformtionen (PPOS) und assoziierte Zwischenschutzradiusinformationen (RPPOS) liefert.

6. Globales System (1), das zur Installation an Bord eines mobilen Objekts ausgelegt ist, nach dem vorherigen Anspruch, **dadurch gekennzeichnet, dass** die Zwischenpositionierungsvorrichtung eine erweiterte Positionierungsvorrichtung ist.

7. Globales System (1) nach einem der Ansprüche 5 bis 6, **dadurch gekennzeichnet, dass** das mobile Objekt ein Luftfahrzeug ist.

FIG.1

FIG. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008040658 A
- WO 2008049800 A